Europäisches Patentamt

European Patent Office

Office européen des brevets

(19)

(11) Veröffentlichungsnummer: **0 287 852**
**A2**

(12) # EUROPÄISCHE PATENTANMELDUNG

(21) Anmeldenummer: 88105010.8

(22) Anmeldetag: 28.03.88

(51) Int. Cl.⁴ **G01P 3/48**

(30) Priorität: 09.04.87 DE 3711976

(43) Veröffentlichungstag der Anmeldung:
**26.10.88 Patentblatt 88/43**

(84) Benannte Vertragsstaaten:
**AT CH DE FR GB IT LI SE**

(71) Anmelder: **Siemens Aktiengesellschaft Berlin
und München
Wittelsbacherplatz 2
D-8000 München 2(DE)**

(72) Erfinder: **Trenkler, Gerhard, Prof.
Am Weissen Kamp 7d
D-3300 Braunschweig(DE)**
Erfinder: **Schollmeyer, Hartmut, Dr.
Grunewaldstrasse 22
D-2000 Hamburg(DE)**
Erfinder: **Nippert, Thomas, Dipl.-Ing.
Holzmühlenstrasse 75a
D-2000 Hamburg(DE)**
Erfinder: **Maier, Reinhard, Dr.
Anna-Herrmann-Strasse 54
D-8522 Herzogenaurach(DE)**

(54) **Verfahren und Anordnung zur Drehzahlerfassung einer elektrischen Maschine.**

(57) Die Erfindung bezieht sich auf eine Anordnung zur sensorlosen Drehzahlmessung an elektrischen Maschinen mittels einer elektronischen Meß-und Verarbeitungsanordnung für Spannungs-und/oder Stromwerte. Zur Ermittlung der Drehzahl erfolgt eine Auswertung im Frequenzbereich, in dem nach geeigneter Pegelanpassung die zeitlichen Verläufe der Spannungen an den elektrischen Anschlüssen der Maschine und/oder der in die Anschlüsse fließenden Ströme, die die Meßanordnung ermittelt, umgesetzt werden.

EP 0 287 852 A2

FIG 1

# Verfahren und Anordnung zur Drehzahlerfassung einer elektrischen Maschine

Die Erfindung bezieht sich auf ein Verfahren zur Drehzahlerfassung an elektrischen Maschinen mittels einer Meß-und elektrischen Verarbeitungsanordnung, die die zeitlichen Verläufe der an den elektrischen Anschlüssen erfaßbaren Meßgrößen aufnimmt und durch Filterung Frequenzteile zur Bildung einer drehzahlproportionalen Größe aussondert.

Eine bekannte Anordnung der obengenannten Art (FR-A-2 555 317 bzw. US-A-4 527 101) betrifft eine Anordnung zur Drehzahlmessung an Universalmotoren. Diese Anordnung wertet in erster Linie die vom Universalmotor hervorgerufenen, relativ starken Oberwellen aus, die bei Asynchronmaschinen nicht in dem Maße vorhanden sind.

Bei bekannten Anordnungen (Gerhard Trenkler, "Die elektrische Messung von Drehzahl und Winkelgeschwindigkeit", insbesondere Seite 36 und 37) werden inkrementale oder analoge Geber, deren Impulse entweder analog oder auch digital durch Frequenzvergleich ausgewertet werden, verwendet. Inkrementale und besonders analoge Aufnehmer erfordern jedoch bei der Applikation, insbesondere bei kleinen Maschinen, einen erhöhten konstruktiven Aufwand. Desweiteren ist ein nachträglicher Einbau in bestehende Systeme mit erheblichem Aufwand verbunden.

Der vorliegenden Erfindung liegt die Aufgabe zugrunde, ein Verfahren und eine Anordnung zu - schaffen, das und die auf einfache, zuverlässige Weise ohne erheblichen mechanischen Aufwand die Erfassung der Maschinendrehzahl zuläßt. Diese Aufgabe wird mit Hilfe dieses Verfahrens auf einfache Weise dadurch gelöst, daß die Maschine eine in Sternschaltung betriebene Asynchronmaschine ist und die Meßanordnung die Dif ferenzspannung zwischen Netzsternpunkt und dem mit diesem nicht verbundenen Sternpunkt der dreiphasig angeschlossenen Asynchronmaschine auswertet. Um aus den zeitlichen Verläufen von Spannung/Strom eine Information über die Drehzahlerfassung auf einfache Weise entnehmen zu können, ist es vorteilhaft, die Zeitverläufe in den Frequenzbereich umzusetzen. Erfaßt ein Tracking-Filter die drehzahlabhängigen spektralen Anteile in den Zeitverläufen von Spannung/Strom, so läßt sich hierdurch eine einfache Erfassung der Meßgrößen erreichen. Eine weitere Möglichkeit der Erfassung der Meßgrößen besteht darin, daß die drehzahlabhängigen spektralen Anteile in den Zeitverläufen von Spannung/Strom in ein frequenzanaloges Ausgangssignal umgesetzt werden. Es ist weiterhin von Vorteil, wenn Spannung/Strom nach einer Filterung in digitale Zahlenfolgen umgesetzt und die folgenden Untersuchungen mit digital arbeitenden, elektronischen Funktionsbausteinen ausgeführt werden. Bei Benutzung digitaler Funktionsbausteine können nach der erfolgten Analog-Digital-Umsetzung vorteilhafterweise die Digitalwertefolgen in gleichlange Segmente geeigneter Länge aufgespalten und die Wertefolgen der einzelnen Segmente normiert und skaliert werden. Zur Umsetzung in den Frequenzbereich ist es weiterhin von Vorteil, wenn die diskrete Fouriertransformation auf die Zeitreihen von Spannung/Strom angewandt wird, wobei die Auswertung von Stromsignalen im Frequenzbereich aus der Druckschrift US-A-4 527 101 kannt ist. Bei Verwendung eines Tracking-Filters können auch die drehzahlabhängigen spektralen Anteile bei Änderung der Drehzahl erfaßt werden und eine drehzahlproportionale diskrete Größe ausgegeben werden. Darüber hinaus vereinfacht ein digitales Filter, z.B. Kammfilter, die Auswertung, die aus einer Identifikation der drehzahlabhängigen spektralen Anteile einer Tracking-Anordnung, die die drehzahlabhängigen spektralen Anteile auch bei Änderung der Drehzahl erfaßt, sowie der Ausgabe einer diskreten drehzahlproportionalen Größe besteht. Eine einfache Anordnung zur Durchführung des Verfahrens ergibt sicn, wenn der elektrischen Maschine eine Einrichtung zur Vorverarbeitung und Fil-terung eine Stufe zur Analog-Digital-Umsetzung, eine Stufe zur Segmentierung, Normierung und Skalierung, ein Fast-Fourier-Transformationsprozessor sowie ein Kammfilter, eine Tracking-Identifikationsstufe und eine Bewertungs-und Ausgangsstufe nachgeschaltet ist. Ist einer elektrischen Maschine eine Einrichtung zur Vorverarbeitung und Filterung, eine Tracking-und Identifikationsstufe sowie eine Bewertungs-und Ausgangsstufe nachgeschaltet, so ergibt sich gegenüber der zuerst genannten Anordnung der Vorteil, daß bei größeren Signal-zu Rauschverhältnissen der apparative Aufwand verringert werden kann. Ohne großen Eingriff in die zu überwachende Maschine kann ausgekommen werden, wenn sie zwischen Netzsternpunkt und dem mit diesem nicht verbundenen Sternpunkt der dreiphasig angeschlossenen Asynchronmaschine angeschlossen ist. Diese Anordnung und das zugehörige Verfahren können sowohl bei Asynchronmaschinen mit Kurzschlußläufern als auch bei solchen mit Schleifringläufern verwendet werden. Im übrigen sind die erfindungsgemäßen Verfahren bzw. Anordnungen bei entsprechender Anpassung auf besonders einfache Weise für Gleichstrommaschinen anwendbar.

Anhand der Zeichnung wird ein Ausführungsbeispiel gemäß der Erfindung beschrieben.

Es zeigen:

Fig. 1 eine Ausführungsmöglichkeit des erfindungsgemäßen Verfahrens in Blockschaltbildform und

Fig. 2 eine vereinfachte Ausführung der Anordnung nach Fig. 1.

Die Asynchronmaschine 2, die an das Netz 1 angeschlossen ist, liefert das Meßsignal $U_{MM'}$, daß eine Pegelanpassung und Vorfilterung 3 durchläuft, ehe es durch den Analog-Digital-Umsetzer 4 digitalisiert wird. Vorverarbeitung und Filterung sowie Analog-Digital-Umsetzung sind beispielsweise aus der Druckschrift 8047 IEEE Trans. on Power apparatus & syst., Vol.PAS-99(1980) Jan/Feb., No. 1, Seite 153 bekannt. Zur Filterung siehe auch Stearns "ADAPTIVE SIGNAL PROCESSING", Prentice-Hall, Inc., Englewood Cliffs, N.J. 07632, S. 316 ff. Die folgenden Funktionsblöcke kennzeichnen aus digitalen Funktionsbausteinen bestehende Vorrichtungen, mit denen eine digitale Signalverarbeitung vorgenommen wird. Die digitalisierten Werte des Meßsignals werden segmentiert, normiert und skaliert, in der Zeichnung beschrieben durch Block 5. Die Umsetzung in den Frequenzbereich erfolgt mit Hilfe eines Fast-Fourier-Transformations-Prozessors 6. Siehe hierzu Brigham Verl. Old. 2. Auflage, S. 247 ff in bezug auf Block 5 und in bezug auf Block 6 S. 181 ff dieser Druckschrift. Ein digitales Kammfilter 7 unterdrückt höhere Harmonische der Netzfrequenz. Derartige Kammfilter sind aus der Druckschrift Stearns "ADAPTIVE SIGNAL PROCESSING", Prentice-Hall, Inc., Englewood Cliffs, N.J. 07632, oder Stearns, D.S.: Digitale Signalverarbeitung analoger Signale, Oldenburg, 1979, S. 318 - 319, vorbekannt. Durch eine Identifikations-und Trackinganordnung 8 werden die drehzahlabhängigen Anteile erfaßt, in der Bewertungs-und Ausgabeeinheit 9 wird daraus die Drehzahl berechnet und ausgegeben.

Die Asynchronmaschine 2 liefert das Meßsignal, das die Drehzahlinformation enthält, als Differenzspannung zwischen Netzsternpunkt und Maschinensternpunkt, der nicht mit dem Netzsternpunkt verbunden ist. Durch den Abgriff des Meßsignals an dieser Stelle wird die Grundschwingung der Netzspannung bereits stark gedämpft, da sich 50 Hz-Spannungskomponenten im Sternpunkt symmetrischer 3-Phasensysteme aufheben. Spannungen in den Wicklungen, die gegeneinander keine 120°-Phasenverschiebung bei gleicher Amplitude aufweisen, führen zu einer Spannung zwischen dem Sternpunkt der Maschine 2 und dem Sternpunkt des als starr angesehenen Netzes 1. Dieses Meßsignal durchläuft die Vorverarbeitung 3, wo eine Pegelanpassung an den Aussteuerbereich des folgenden Analog-Digital-Umsetzers 4 und eine Vorfilterung stattfinden. Diese Vorfilterung stellt die Einhaltung des Abtasttheorems sicher, die Voraussetzung für die folgende digitale Signalverarbeitung ist. Der Analog-Digital-Umsetzer 4 setzt das analoge, gefilterte Eingangssignal in digitale Wertefolgen um, damit die folgende Bearbeitung mit digitalen, elektronischen Funktionsbausteinen vorgenommen werden kann. Die digitalen Wertefolgen u(nT) werden in aufeinanderfolgende Segmente jeweils gleicher geeigneter Länge gespalten. Die Anzahl der Werte in den Segmenten sollte wegen der Verwendung der FFT gegenüber der DFT ein ganzzahliges Vielfaches von 2 sein. In jedem einzelnen Segment erfolgen die Berechnung des arithmetischen Mittelwertes $U_{Sm}$, die Normierung durch Bildung von $u(nT)-U_{Sm}$ und die Skalierung mit einem durch die bisher durchlaufene Signalverarbeitungskette bestimmten Faktor. Segmentierung, Normierung und Skalierung sind in der - schematischen Darstellung in Block 5 zu finden. Durch Anwendung der Fast-Fourier-Transformation auf die digitalen Wertefolgen erfolgt die Umsetzung in den Frequenzbereich. Dabei erhält man exakt so viele diskrete Frequenzwerte mit ihren zugehörigen Amplituden, wie die Zeitreihe Punkte besitzt. Der Abstand der einzelnen Frequenzen ist durch den Quotienten aus Abtastrate des Analog-Digital-Umsetzers und Anzahl der Punkte eines Segmentes bestimmt. Das resultierende Spektrum wird zur weiteren Verarbeitung verwendet. Um den Umfang der dafür notwendigen Algorithmen zu reduzieren, unterdrückt ein Filteralgorithmus (Kammfilter) 7 die höheren Harmonischen der Netzfrequenz. Die auf diese Weise erzeugten Spektren der einzelnen Segmente werden nun einem Identifikations-und Trackingalgorithmus 8 unterzogen, der die drehzahlabhängigen spektralen Anteile erfaßt, wobei eine Kenntnis der Frequenzbereiche, in denen diese Anteile auftreten, von Vorteil ist. Aus den drehzahlabhängigen spektralen Anteilen wird von der Bewertungs-und Ausgabeeinheit 9 die Maschinendrehzahl berechnet und der Drehzahlwert ausgegeben.

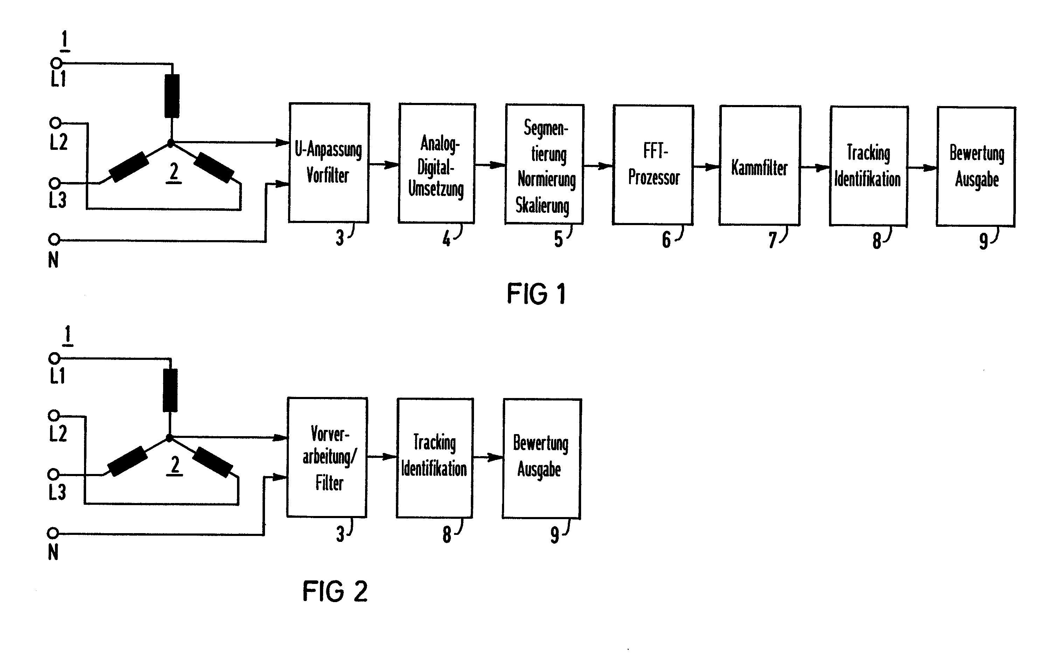

Die in Fig. 2 dargestellte Anordnung und das hierzu anzuwendende Verfahren stellt die analoge Variante zur Ausführung nach Fig.1 dar. Hier können zwar die Analog-Digital-Umsetzung 4 die Segmentierung, Normierung und Skalierung Block 5, sowie der FFT-Prozessor 6 und der Kammfilter 7 entfallen. Die Umsetzung in den Frequenzbereich erfolgt im Trackingfilter 8. Die Ausführung nach Fig. 2 ist gegenüber der Ausführung in Fig. 1 einfacher aufgebaut. Sie ist jedoch im wesentlichen nur bei schnellaufenden Maschinen anwendbar.

**Ansprüche**

1. Verfahren zur Drehzahlerfassung an elektrischen Maschinen mittels einer Meß-und elektrischen Verarbeitungsanordnung, die die zeitlichen Verläufe der an den elektrischen Anschlüssen erfaßbaren Meßgrößen aufnimmt und durch Filterung Frequenzteile zur Bildung einer drehzahlproportionalen Größe aussondert, **dadurch gekennzeichnet,** daß die Maschine eine in Sternschaltung betriebene Asynchronmaschine (2) ist und die Meßanordnung die Differenzspannung zwischen Netzsternpunkt und dem mit diesem nicht verbundenen Sternpunkt der dreiphasig angeschlossenen Asynchronmaschine auswertet.

2. Verfahren nach Anspruch 1, **dadurch gekennzeichnet,** daß die zeitlichen Verläufe von Spannung und Strom in den zugehörigen Frequenzbereich überführt werden.

3. Verfahren nach Anspruch 1 und 2, **dadurch gekennzeichnet,** daß ein Tracking-Filter (8) die drehzahlabhängigen spektralen Anteile in den Zeitverläufen von Spannung/Strom erfaßt.

4. Verfahren nach Anspruch 3, **dadurch gekennzeichnet,** daß die drehzahlabhängigen spektralen Anteile in den Zeitverläufen von Spannung/Strom in ein frequenzanaloges Ausgangssignal (8, 9) umgesetzt werden. (FIG 2)

5. Verfahren nach Anspruch 1 und 2, **dadurch gekennzeichnet,** daß Spannung/Strom nach einer Filterung in digitale Zahlenfolgen umgesetzt (4) und die folgenden Untersuchungen mit digital arbeitenden, elektronischen Funktionsbausteinen (5 - 9) ausgeführt werden. (FIG 1)

6. Verfahren nach Anspruch 5, **dadurch gekennzeichnet,** daß die digitalen Wertefolgen in gleichlange Segmente geeigneter Länge aufgespalten und die Wertefolgen der einzelnen Segmente normiert und skaliert (5) werden. (FIG 1)

7. Verfahren nach Anspruch 5 und 6, **dadurch gekennzeichnet,** daß die diskrete Fouriertransformation (6) auf die Zeitreihen von Spannung/Strom angewandt wird. (FIG 1)

8. Verfahren nach Anspruch 5 bis 7, **dadurch gekennzeichnet,** daß die drehzahlabhängigen spektralen Anteile auch bei Änderung der Drehzahl erfaßt werden (8, Tracking) und eine drehzahlproportionale diskrete Größe ausgegeben (9) wird. (FIG 1)

9. Anordnung zur Durchführung des Verfahrens nach einem oder mehreren der Ansprüche 1 bis 8, **dadurch gekennzeichnet,** daß der elektrischen Maschine (2) eine Einrichtung zur Vorverarbeitung und Filterung (3), eine Stufe zur Analog-Digitalumsetzung (4), eine Stufe zur Segmentierung, Normierung und Skalierung (5), ein Fast-Fourier-Transformationsprozessor (6), sowie ein Kammfilter (7), eine Tracking/Identifikationsstufe (8) und eine Bewertungs-und Ausgangsstufe (9) nachgeschaltet ist. (FIG 1)

10. Anordnung zur Durchführung des Verfahrens nach einem oder mehreren der Ansprüche 1 bis 8, **dadurch gekennzeichnet,** daß der elektrischen Maschine (2) eine Einrichtung zur Vorverarbeitung und Filterung (3), eine Tracking-und Identifikationsstufe (8) sowie eine Bewertungs-und Ausgangsstufe (9) nachgeschaltet ist. (FIG 2)

11. Anordnung nach Anspruch 9 oder 10, **dadurch gekennzeichnet,** daß sie zwischen Netzsternpunkt und dem mit diesem nicht verbundenen Sternpunkt der dreiphasig angeschlossenen Asynchronmaschine angeschlossen ist.

**FIG 1**

**FIG 2**

0 287 852